# EUROPEAN PATENT APPLICATION

(11) **EP 4 730 005 A1**
(43) Date of publication of application: **22.04.2026**
(21) Application number: 24853113.9
(22) Date of filing: 09.01.2024
(51) Int. Cl.: G02B 6/42, G02B 6/293

(54) **OPTICAL ASSEMBLY, OPTICAL MODULE, AND RELATED DEVICE**

(30) Priority: 15.08.2023 CN 202311033123
(71) Applicant: Huawei Technologies Co., Ltd., Shenzhen, Guangdong 518129 (CN)
(72) Inventor: SHEN, Yu, Shenzhen, Guangdong 518129 (CN); SUN, Feiyu, Shenzhen, Guangdong 518129 (CN); LI, Shu, Shenzhen, Guangdong 518129 (CN)
(74) Representative: Isarpatent
(86) International application number: PCT/CN2024/071252
(87) International publication number: WO 2025/035696

(57) **Abstract**

An optical assembly, an optical module, and a related device are provided. An optical splitting unit in the optical assembly receives an input signal light obtained by multiplexing signal lights of N passive optical networks from a first direction, demultiplexes the input signal light to obtain a first signal light including M wavelengths and a second signal light including N-M wavelengths, and transmits the first signal light and the second signal light to receiving modules, where N is an integer greater than 1, M is an integer greater than or equal to 1, and M is less than or equal to N-1. A function of outputting beams with a plurality of different wavelengths at corresponding ports can be implemented without an external device, and an included angle between the first direction and a normal line of a first optical splitting unit is less than or equal to 45 degrees, so that the optical splitting unit of the optical assembly implements optical splitting based on the small angle, establishes an extremely narrow optical splitting path, and may be directly used in the optical module of an optical line termination, thereby implementing miniaturization of the optical line termination.

## Description

This application claims priority to Chinese Patent Application No. 202311033123.0, filed with the China National Intellectual Property Administration on August 15, 2023 and entitled "Optical ASSEMBLY, OPTICAL MODULE, AND RELATED DEVICE" which is incorporated herein by reference in its entirety.

### TECHNICAL FIELD

Embodiments of this application relate to the field of optical communication technologies, and specifically, to an optical assembly, an optical module, and a related device.

### BACKGROUND

In early gigabit-capable passive optical network (gigabit-capable passive optical network, G-PON) deployment, operators offered 100 Mbit/s broadband access services. However, as users have high requirements on bandwidth access speeds, operators upgrade the network to 10-gigabit-capable passive optical network (10-gigabit-capable passive optical network, 10G-PON/XG-PON), 10-gigabit-capable symmetric passive optical network (10-gigabit-capable symmetric passive optical network, XGS-PON), or even 50-gigabit-capable passive optical network (50-gigabit-capable passive optical network, 50G-PON).

Currently, users do not have urgent demands for higher bandwidth, so G-PON will remain in service for a long period of time. High-bandwidth XGS-PON is used in commercial scenarios, and may be later upgraded to 50G-PON. In this case, multiple generations of passive optical networks including G-PON, XG-PON, XGS-PON, and 50G-PON coexist. To accommodate this situation, currently, an external coexistence wavelength division multiplexer is used on an optical line termination (optical line termination, OLT), to allocate signal lights with different wavelengths of multiple generations of networks.

However, the external wavelength division multiplexer increases insertion losses of optical links, also increases complexity of operation and maintenance, and in particular, increases a size of the OLT.

### SUMMARY

Embodiments of this application provide an optical assembly for achieving miniaturization of an optical line termination. Embodiments of this application further provide a corresponding optical module, an optical line termination, and an optical network unit.

A first aspect of this application provides an optical assembly. The optical assembly includes an optical splitting module and a receiving module, and the optical splitting module includes a first optical splitting unit. The first optical splitting unit is configured to receive an input signal light from a first direction, where the input signal light is a signal light obtained by multiplexing signal lights of N passive optical networks, and an included angle between the first direction and a normal line of the first optical splitting unit is less than or equal to 45 degrees. The first optical splitting unit is further configured to: demultiplex the input signal light to obtain a first signal light and a second signal light, and transmit the first signal light and the second signal light to the receiving module, where the first signal light includes M wavelengths, the second signal light includes N-M wavelengths, the M wavelengths correspond to M passive optical networks in the N passive optical networks, and the N-M wavelengths correspond to N-M passive optical networks in the N passive optical networks, where N is an integer greater than 1, M is an integer greater than or equal to 1, and M is less than or equal to N-1.

The optical assembly in this application may be used in an optical module of an optical line termination.

The input signal light in this application is an upstream signal light, namely, a signal light sent by an optical network unit on a client side to the optical line termination on a device side.

In this application, each of the N passive optical networks corresponds to one wavelength range. The first signal light includes the M wavelengths, the M wavelengths correspond to M wavelength ranges, in other words, the M wavelengths respectively belong to the M wavelength ranges, and the M wavelength ranges correspond to the M passive optical networks. The first signal light may be understood as a signal light obtained by multiplexing signal lights of the M passive optical networks.

Similarly, the second signal light includes the N-M wavelengths, and the N-M wavelengths correspond to N-M wavelength ranges, in other words, the N-M wavelengths respectively belong to the N-M wavelength ranges, and the N-M wavelength ranges correspond to the N-M passive optical networks. The second signal light may be understood as a signal light obtained by multiplexing signal lights of the N-M passive optical networks.

In the first aspect, the included angle between the first direction and the normal line of the first optical splitting unit is less than or equal to 45 degrees. For the included angle between the first direction, to be specific, a direction in which the input signal light is incident to the first optical splitting unit and the normal line of the first optical splitting unit, it needs to be considered that the first signal light can be isolated from the second signal light, and miniaturization of the entire optical assembly can be met.

When the included angle between the first direction and the normal line of the first optical splitting unit is less than or equal to 45 degrees, the first optical splitting unit can not only isolate the first signal light from the second signal light through transparent transmission and reflection, but also cause an included angle between the first signal light and the second signal light to be greater than or equal to 90 degrees. In this way, the receiving module configured to receive the first signal light and the receiving module configured to receive the second signal light may be disposed on a same plane as much as possible, to implement miniaturization of the optical assembly. The optical splitting unit of the optical assembly implements optical splitting based on the small angle, and establishes an extremely narrow optical splitting path. When the optical assembly is used in an optical module of an optical line termination, not only the optical assembly is miniaturized, but also the optical line termination can implement a function of outputting beams with a plurality of different wavelengths at corresponding ports without an external device, thereby implementing miniaturization of the optical line termination.

In a possible implementation of the first aspect, the included angle between the first direction and the normal line of the first optical splitting unit is less than or equal to 13.5 degrees.

In this possible implementation, when the included angle between the first direction and the normal line of the first optical splitting unit is less than or equal to 13.5 degrees, demultiplexing of the input signal light can be implemented, and miniaturization of the optical assembly is facilitated, so that implementability of the solution is improved.

In a possible implementation of the first aspect, the optical assembly further includes a transmission module, and the optical splitting module further includes a second optical splitting unit.

The transmission module is configured to: multiplex the signal lights of the N passive optical networks to obtain an output signal light, and transmit the output signal light to the second optical splitting unit, where the second optical splitting unit is configured to transparently transmit the output signal light.

In this possible implementation, the optical assembly is a single-fiber bidirectional optical assembly, where the output signal light transmitted by the transmission module is a downstream signal light, namely, a signal light sent by the optical line termination on the device side to the optical network unit on the client side, to implement a bidirectional multiplexing/demultiplexing function.

In a possible implementation of the first aspect, the second optical splitting unit is further configured to: receive an input signal light from a second direction, and reflect the input signal light to the first optical splitting unit in the first direction.

In this possible implementation, the second optical splitting unit is reused, and the second optical splitting unit isolates wavelengths at a transmit end and a receive end, so that the transmission module and the receiving module can be coupled, thereby facilitating miniaturization of the optical assembly.

In a possible implementation of the first aspect, an included angle between the second direction and a normal line of the second optical splitting unit is less than or equal to 45 degrees.

In this possible implementation, when the included angle between the second direction and the normal line of the second optical splitting unit is less than or equal to 45 degrees, the wavelengths at the transmit end and the receive end can be isolated, so that implementability of the solution is improved.

In a possible implementation of the first aspect, the included angle between the second direction and the normal line of the second optical splitting unit is less than or equal to 13.5 degrees.

In this possible implementation, when the included angle between the second direction and the normal line of the second optical splitting unit is less than or equal to 13.5 degrees, not only the wavelengths at the transmit end and the receive end can be isolated, but also miniaturization of the optical assembly is facilitated.

In a possible implementation of the first aspect, the optical splitting module further includes a third optical splitting unit. The first optical splitting unit is configured to transparently transmit the first signal light to the third optical splitting unit. The third optical splitting unit is configured to reflect the first signal light to the receiving module.

In this possible implementation, the additional third optical splitting unit is disposed, so that a direction of the first signal light can be changed, and a position of the receiving module is correspondingly changed, thereby facilitating miniaturization of the optical assembly.

In a possible implementation of the first aspect, the optical splitting module further includes a fourth optical splitting unit. The first optical splitting unit is configured to reflect the second signal light to the fourth optical splitting unit. The fourth optical splitting unit is configured to reflect the second signal light to the receiving module.

In this possible implementation, the additional fourth optical splitting unit is disposed, so that a direction of the second signal light can be changed, and a position of the receiving module is correspondingly changed, thereby facilitating miniaturization of the optical assembly.

In a possible implementation of the first aspect, the optical splitting module further includes a fifth optical splitting unit and a sixth optical splitting unit, and M is greater than 1.

The third optical splitting unit is specifically configured to reflect the first signal light to the fifth optical splitting unit. The fifth optical splitting unit is configured to: demultiplex the first signal light to obtain a third signal light and a fourth signal light, transparently transmit the third signal light to the receiving module, and reflect the fourth signal light to the sixth optical splitting unit. The sixth optical splitting unit is configured to reflect the fourth signal light to the receiving module.

In this possible implementation, the additional fifth optical splitting unit and sixth optical splitting unit may be disposed, to continue to demultiplex the first signal light, and send a demultiplexed signal light to different receiving modules for receiving. This improves adaptability of the receiving modules, and improves implementability of the solution.

In a possible implementation of the first aspect, the optical splitting module further includes a seventh optical splitting unit and an eighth optical splitting unit, and N-M is greater than 1. The fourth optical splitting unit is specifically configured to reflect the second signal light to the seventh optical splitting unit. The seventh optical splitting unit is configured to: demultiplex the second signal light to obtain a fifth signal light and a sixth signal light, transparently transmit the fifth signal light to the receiving module, and reflect the sixth signal light to the eighth optical splitting unit. The eighth optical splitting unit is configured to reflect the sixth signal light to the receiving module.

In this possible implementation, the additional seventh optical splitting unit and eighth optical splitting unit may be disposed, to continue to demultiplex the second signal light, and send a demultiplexed signal light to different receiving modules for receiving. This improves adaptability of the receiving modules, and improves implementability of the solution.

In a possible implementation of the first aspect, the optical splitting module further includes a ninth optical splitting unit, the third optical splitting unit is specifically configured to reflect the first signal light to the ninth optical splitting unit, and the ninth optical splitting unit is configured to reflect the first signal light to the receiving module.

In this possible implementation, the additional ninth optical splitting unit is disposed, so that a direction of the first signal light can be further changed, and a position of the receiving module is correspondingly changed, thereby facilitating miniaturization of the optical assembly.

In a possible implementation of the first aspect, the optical splitting module further includes a tenth optical splitting unit, the fourth optical splitting unit is specifically configured to reflect the second signal light to the tenth optical splitting unit, and the tenth optical splitting unit is configured to reflect the second signal light to the receiving module.

In this possible implementation, the additional tenth optical splitting unit is disposed, so that a direction of the second signal light can be further changed, and a position of the receiving module is correspondingly changed, thereby facilitating miniaturization of the optical assembly.

In a possible implementation of the first aspect, the receiving module includes a receiving port, a quantity of receiving ports is 1 to N, and the receiving port is configured to receive a signal light of at least one passive optical network.

In this possible implementation, the receiving port may simultaneously receive signal lights of a plurality of different passive optical networks, to improve adaptability of the receiving port, and improve adaptability of signal lights of different passive optical networks.

In a possible implementation of the first aspect, the receiving port includes a filtering unit, and the filtering unit is configured to allow a signal light that is of a passive optical network and that matches the receiving port to pass.

In this possible implementation, isolation of the optical splitting unit for signal lights in different wavelength ranges is limited. Therefore, a filtering unit is further disposed at the receiving port, to filter out a signal light with a wavelength that does not match the receiving port. This improves receiving stability of the optical assembly.

In a possible implementation of the first aspect, the receiving port uses any one of transistor outline TO, butterfly packaging, or chips on board COB.

In this possible implementation, the receiving port may use a plurality of encapsulation forms, to improve implementability of the solution.

In a possible implementation of the first aspect, the transmission module includes N optical transmitters and N-1 to N+1 transmission optical splitting units, and the N-1 to N+1 transmission optical splitting units are configured to multiplex signal lights emitted by the N optical transmitters, to obtain the output signal light.

In this possible implementation, multiplexing integration for the N optical transmitters in the transmission module is performed, to implement miniaturization of the optical assembly.

In a possible implementation of the first aspect, the optical assembly further includes an isolation board, the isolation board is configured to isolate the transmission module from the receiving module, an optical window is disposed on the isolation board, and the optical window is configured to transparently transmit the output signal light.

In this possible implementation, the transmission module and the receiving module in the optical assembly may be coupled, so that miniaturization of the optical assembly is implemented without affecting optical performance.

In a possible implementation of the first aspect, the first optical splitting unit is any one of a filter, a beam splitting prism, or a demultiplexer.

In this possible implementation, there may be a plurality of options for optical splitting units, to improve implementability of the solution.

In a possible implementation of the first aspect, the N passive optical networks include any N types of the following: gigabit-capable passive optical network G-PON, 10-gigabit-capable passive optical network 10G-PON/XG-PON, 10-gigabit-capable symmetric passive optical network XGS-PON, 50-gigabit-capable passive optical network 50G-PON, Ethernet passive optical network EPON, 10-gigabit Ethernet passive optical network 10G-EPON, and 50-gigabit Ethernet passive optical network 50G-EPON.

In this possible implementation, the optical assembly supports multiple generations of passive optical networks, to improve implementability of the solution.

A second aspect of this application provides an optical module. The optical module includes the optical assembly according to any one of the first aspect or the possible implementations of the first aspect.

A third aspect of this application provides an optical line termination. The optical line termination includes the optical module according to any one of the second aspect or the possible implementations of the second aspect.

A fourth aspect of this application provides an optical network unit. The optical network unit includes the optical module according to any one of the second aspect or the possible implementations of the second aspect.

In embodiments of this application, an optical splitting unit in an optical assembly receives an input signal light obtained by multiplexing signal lights of N passive optical networks from a first direction, demultiplexes the input signal light to obtain a first signal light including M wavelengths and a second signal light including N-M wavelengths, and transmits the first signal light and the second signal light to a receiving module, where N is an integer greater than 1, M is an integer greater than or equal to 1, and M is less than or equal to N-1. In this way, beams with a plurality of different wavelengths can be output at corresponding ports without using an external device, and an included angle between the first direction and a normal line of a first optical splitting unit is less than or equal to 45 degrees. This allows the optical splitting unit of the optical assembly to achieve optical splitting based on the small angle, establish an extremely narrow optical splitting path, and to be directly used in the optical module of an optical line termination, thereby implementing miniaturization of the optical line termination.

### BRIEF DESCRIPTION OF DRAWINGS

FIG. 1 is a diagram of an architecture of a passive optical network;
FIG. 2 is a diagram of a structure of an optical line termination according to an embodiment of this application;
FIG. 3 is a diagram of an embodiment of an optical assembly according to embodiments of this application;
FIG. 4A and FIG. 4B are diagrams of embodiments of an optical assembly according to embodiments of this application;
FIG. 5A to FIG. 5C are diagrams of embodiments of a transmission module according to embodiments of this application;
FIG. 6 to FIG. 11 are diagrams of embodiments of an optical assembly according to embodiments of this application; and
FIG. 12 is a diagram of an embodiment of a passive optical network according to embodiments of this application.

### DESCRIPTION OF EMBODIMENTS

The following describes embodiments of this application with reference to the accompanying drawings. It is clear that the described embodiments are merely some rather than all of embodiments of this application. A person of ordinary skill in the art may know that with development of technologies and emergence of new scenarios, technical solutions provided in embodiments of this application are also applicable to resolving similar technical problems.

In the specification, claims, and accompanying drawings of this application, the terms "first", "second", and the like are intended to distinguish between similar objects but do not necessarily indicate a specific order or sequence. It should be understood that, the data termed in such a way is interchangeable in proper circumstances, so that embodiments described herein can be implemented in other sequences than the content illustrated or described herein. In addition, the terms "include", "have" and any other variants thereof are intended to cover non-exclusive inclusion. For example, a process, method, system, product, or device that includes a list of steps or units is not necessarily limited to those steps or units that are expressly listed, but may include other steps or units that are not expressly listed or inherent to such a process, method, product, or device.

The specific term "example" herein means "used as an example, embodiment or illustration". Any embodiment described as "example" is not necessarily explained as being superior or better than other embodiments.

In addition, to better describe this application, numerous specific details are given in the following specific implementations. A person skilled in the art should understand that this application can also be implemented without some specific details. In some instances, methods, means, elements and circuits that are well-known to a person skilled in the art are not described in detail, so that a subject matter of this application is highlighted.

The following describes an application scenario in embodiments of this application by using an example.

A passive optical network (passive optical network, PON) is a passive optical network of a point to multi-point structure, and is a combination of network elements in an optical access network based on an optical distribution network (optical distribution network, ODN), where the optical distribution network does not include any electronic device or electronic power supply. The ODN is completely composed of passive devices such as splitters. A PON includes an optical line termination (optical line termination, OLT) mounted in a central control station and a plurality of optical network units (optical network units, ONUs) mounted in user places, and implements a specific set of physical media dependent layers, transport convergence layers, and management protocols.

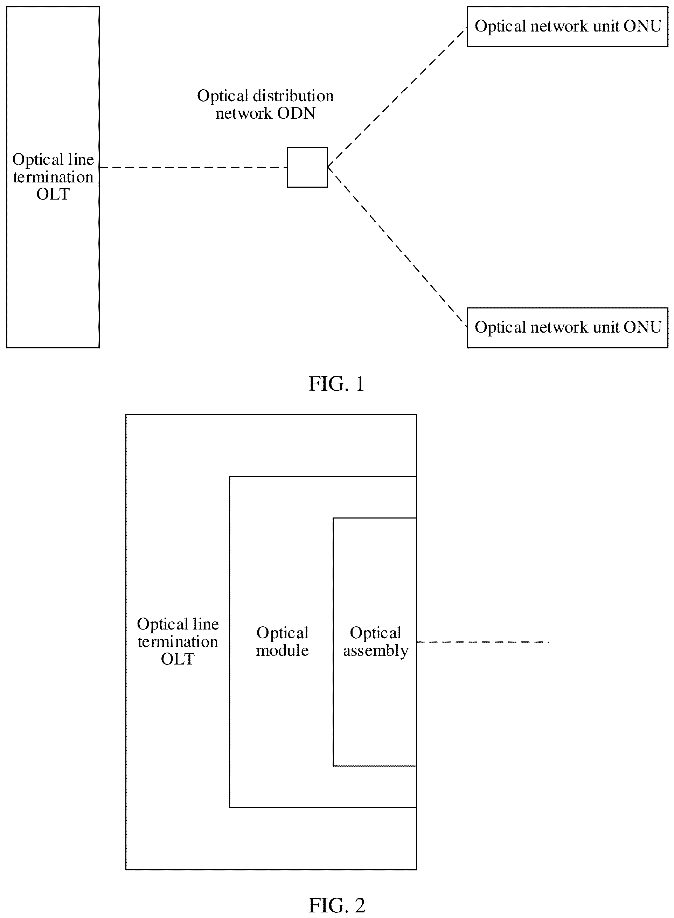

As shown in FIG. 1, an optical line termination OLT is connected to two optical network units ONUs through an optical distribution network ODN. The ODN is an entire passive optical network from an OLT port to each ONU port. It should be understood that, in another networking scenario, one OLT may be further connected to more ONUs. The OLT needs to be interconnected with the ODN via an optical module. The optical module needs to convert, into a signal light, an electrical signal sent by the OLT, and transfer the signal light to the ONU through the ODN; and the optical module also needs to convert, into an electrical signal, a signal light transferred by the ONU through the ODN, and then send the electrical signal to the OLT.

In early gigabit-capable passive optical network (gigabit-capable passive optical network, G-PON) deployment, operators offered 100 Mbit/s broadband access services. However, as users have high requirements on bandwidth access speeds, operators upgrade the network to 10-gigabit-capable passive optical network (10-gigabit-capable passive optical network, 10G-PON/XG-PON), 10-gigabit-capable symmetric passive optical network (10-gigabit-capable symmetric passive optical network, XGS-PON), or even 50-gigabit-capable passive optical network (50-gigabit-capable passive optical network, 50G-PON).

Currently, users do not have urgent demands for higher bandwidth, so G-PON will remain in service for a long period of time. High-bandwidth XGS-PON is used in commercial scenarios, and may be later upgraded to 50G-PON. In this case, multiple generations of passive optical networks including G-PON, XG-PON, XGS-PON, and 50G-PON coexist. Because upstream and downstream wavelengths in G-PON, 10G-PON, and 50G-PON are different, to accommodate this situation, there is a need for an external wavelength division multiplexer, for example, an external coexistence wavelength division multiplexer is used on an OLT, to multiplex or demultiplex signal lights in upstream and downstream directions, implement compatibility between different wavelengths of multiple generations of PONs, and allocate signal lights of multiple generations of PONs with different wavelengths.

However, the external wavelength division multiplexer increases insertion losses of optical links, also increases complexity of operation and maintenance, and in particular, increases a size of the OLT. Based on this, embodiments of this application provide an optical assembly, to implement miniaturization of an optical line termination. Embodiment of this application further provide a corresponding optical module and an optical line termination.

As shown in FIG. 2, the optical assembly provided in embodiments of this application may be directly disposed inside the optical module, and an external wavelength division multiplexer that increases a size of the OLT is not needed. In addition to implementing optical-to-electrical conversion, the optical module may further implement a demultiplexing function of multiple generations of PONs, and the optical assembly establishes an extremely narrow optical splitting path, thereby ensuring miniaturization of the optical line termination.

It should be understood that, in the accompanying drawings in embodiments of this application, a dashed line indicates a signal light, and a dash-dot line indicates a normal line.

The following describes the optical assembly provided in embodiments of this application with reference to the foregoing application scenario.

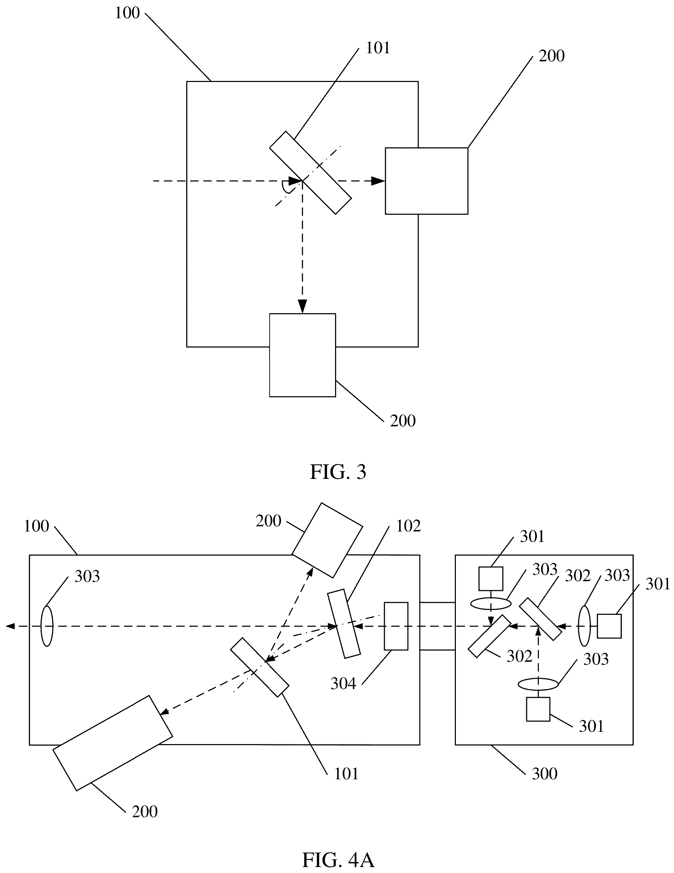

As shown in FIG. 3, an embodiment of this application provides an optical assembly. The optical assembly includes an optical splitting module 100 and receiving modules.

Specifically, the optical splitting module 100 includes a first optical splitting unit 101. The first optical splitting unit 101 is configured to: receive an input signal light from a first direction, demultiplex the input signal light to obtain a first signal light and a second signal light, and finally transmit the first signal light and the second signal light to the receiving modules. For example, the first optical splitting unit 101 transparently transmits the first signal light to one receiving module, and reflects the second signal light to another receiving module.

The input signal light is a signal light obtained by multiplexing signal lights of N passive optical networks, and the N passive optical networks include any N types of the following: G-PON, 10G-PON/XG-PON, XGS-PON, 50G-PON, Ethernet passive optical network (Ethernet passive optical network, EPON), 10G-EPON, and 50G-EPON.

For example, N is 3. Three passive optical networks are G-PON, 10G-PON, and 50G-PON, each passive optical network corresponds to a wavelength range (it should be understood that wavelength ranges of different passive optical networks may overlap), and each wavelength range may be represented by a center wavelength of the wavelength range of the passive optical network. The input signal light is an upstream signal light (namely, a signal light sent by an ONU on a client side to an OLT on a device side), an upstream center wavelength of G-PON is 1310 nm, an upstream center wavelength of 10G-PON is 1270 nm, an upstream center wavelength of 50G-PON is 1286 nm, and a specific wavelength range of the passive optical network is extended by using the center wavelength as a center. For example, a wavelength range of G-PON is 1290 nm to 1330 nm, a wavelength range of 10G-PON is 1260 nm to 1280 nm, and a wavelength range of 50G-PON is 1284 nm to 1288 nm. In embodiments of this application, G-PON, 10G-PON, and 50G-PON are subsequently used as examples for description, and different wavelength ranges or center wavelengths are used to represent different passive optical networks.

It should be understood that, with upgrade of the passive optical network, the optical assembly provided in embodiments of this application is also applicable to a wavelength range of a subsequently upgraded passive optical network such as a next-generation PON or EPON. This is not limited in embodiments of this application.

After demultiplexing the input signal light, the first optical splitting unit 101 obtains the first signal light and the second signal light, where the first signal light includes M wavelengths, the second signal light includes N-M wavelengths, the M wavelengths correspond to M passive optical networks in the N passive optical networks, and the N-M wavelengths correspond to N-M passive optical networks in the N passive optical networks. N is an integer greater than 1, M is an integer greater than or equal to 1, and M is less than or equal to N-1.

For example, the first signal light includes two wavelengths: 1300 nm and 1275 nm. If 1300 nm belongs to a wavelength range of G-PON, and 1275 nm belongs to a wavelength range of 10G-PON, the two wavelengths of the first signal light correspond to the two passive optical networks, and the first signal light includes the wavelengths of the two passive optical networks: G-PON and 10G-PON.

Further, the receiving module includes a receiving port 200, and there are 1 to N receiving ports 200. The receiving port 200 is configured to receive a signal light of at least one passive optical network, in other words, the receiving port 200 may receive signal lights with 1 to N wavelength ranges. The receiving port 200 may specifically use transistor outline (transistor outline, TO), butterfly packaging (BOX packaging), or chips on board (chips on board, COB). An example in which the receiving port 200 uses the TO is used. The TO may be single-channel TO for receiving a signal light with one wavelength range, dual-channel TO for receiving signal lights with two wavelength ranges, triple-channel TO for receiving signal lights with three wavelength ranges, or the like.

For example, when N is 2 and M is 1, the input signal light is a signal light obtained by multiplexing signal lights of G-PON and 10G-PON. A wavelength of the first signal light is 1310 nm (G-PON), and a wavelength of the second signal light is 1270 nm (10G-PON). The receiving module includes two receiving ports, which are respectively a first receiving port and a second receiving port. The first receiving port is configured to receive the first signal light of G-PON, and the second receiving port is configured to receive the second signal light of 10G-PON.

Alternatively, a wavelength of the first signal light is 1270 nm (10G-PON), and a wavelength of the second signal light is 1310 nm (G-PON). The first receiving port is configured to receive the first signal light of 10G-PON, and the second receiving port is configured to receive the second signal light of G-PON.

When N is 3 and M is 1, the input signal light is a signal light obtained by multiplexing signal lights of G-PON, 10G-PON, and 50G-PON. A wavelength of the first signal light is 1310 nm (G-PON), and the second signal light is a signal light including two wavelengths, where the wavelengths of the signal lights are 1270 nm (10G-PON) and 1286 nm (50G-PON). The receiving module includes two receiving ports: a first receiving port and a second receiving port. The first receiving port is configured to receive the first signal light of G-PON, and the second receiving port is configured to receive the second signal light of 10G-PON and 50G-PON, where the second receiving port uses dual-channel TO.

When N is 3 and M is 2, the input signal light is a signal light obtained by multiplexing signal lights of G-PON, 10G-PON, and 50G-PON. The first signal light includes signal lights with two wavelengths, where the wavelengths of the signal light are 1310 nm (G-PON) and 1270 nm (10G-PON), and a wavelength of the second signal light is 1286 nm (50G-PON). The receiving module includes two receiving ports: a first receiving port and a second receiving port. The first receiving port is configured to receive the first signal light of G-PON and 10G-PON, and the second receiving port is configured to receive the second signal light of 50G-PON, where the first receiving port uses dual-channel TO.

Optionally, the receiving port 200 includes a filtering unit, configured to allow a signal light that is of a passive optical network and that matches the receiving port 200 to pass. Because the input signal light passes through only one first optical splitting unit 101, and an isolation capability of the first optical splitting unit 101 for signal lights with wavelengths of 1286 nm is limited (about 15 dB). As a result, a small amount of signal lights with the wavelengths of 1286 nm still incident to the dual-channel TO (the receiving port 200 of 10G-PON and G-PON). Therefore, two 0-degree filters are disposed inside the dual-channel TO, which are a low-pass high-block filter (for example, on a 10G-PON receiving side, a wavelength less than 1280 nm is allowed to pass, and a wavelength greater than 1284 nm is blocked) and a high-pass low-block filter (for example, on a G-PON receiving side, a wavelength greater than 1290 nm is allowed to pass, and a wavelength less than 1288 nm is blocked).

In this embodiment of this application, an included angle between the first direction and a normal line of the first optical splitting unit 101 is less than or equal to 45 degrees. For the included angle between the normal line of the first optical splitting unit 101 and the first direction, to be specific, a direction in which the input signal light is incident to the first optical splitting unit 101, it needs to be considered that the first signal light can be isolated from the second signal light, and miniaturization of the entire optical assembly can be met. When the included angle between the first direction and the normal line of the first optical splitting unit 101 is less than or equal to 45 degrees, the first optical splitting unit can not only isolate the first signal light from the second signal light through transparent transmission and reflection, but also cause an included angle between the first signal light and the second signal light to be greater than or equal to 90 degrees. In this way, the receiving module configured to receive the first signal light and the receiving module configured to receive the second signal light may be disposed on a same plane as much as possible, to implement miniaturization of the optical assembly. The optical splitting unit of the optical assembly implements optical splitting based on the small angle, and establishes an extremely narrow optical splitting path. When the optical assembly is used in an optical module of an optical line termination, not only the optical assembly is miniaturized, but also the optical line termination can implement a function of outputting beams with a plurality of different wavelengths at corresponding ports without an external device, thereby implementing miniaturization of the optical line termination.

Optionally, the included angle between the first direction and the normal line of the first optical splitting unit 101 is less than or equal to 13.5 degrees. In this case, the first optical splitting unit 101 may transparently transmit a first signal light with a wavelength of 1286 nm of 50G-PON, and reflect a second signal light including a wavelength of 1270 nm of 10G-PON and a wavelength of 1310 nm of G-PON, where the included angle between the first direction and the normal line of the first optical splitting unit 101 may be specifically 13.5 degrees, 13 degrees, or 8 degrees, and the angle is adjusted and controlled through active coupling.

In embodiments of this application, the optical splitting module 100 may further include more optical splitting units. Detailed descriptions are provided separately below.

### Case 1: Second optical splitting unit

As shown in FIG. 4A, the optical assembly further includes a transmission module 300, and the optical splitting module 100 further includes a second optical splitting unit 102.

The transmission module 300 is configured to: multiplex the signal lights of the N passive optical networks to obtain an output signal light, and transmit the output signal light to the second optical splitting unit 102. The second optical splitting unit 102 is configured to transparently transmit the output signal light, and the second optical splitting unit 102 is further configured to: receive an input signal light from a second direction, and reflect the input signal light to the first optical splitting unit 101 in the first direction.

The optical assembly is a single-fiber bidirectional optical assembly. The output signal light transmitted by the transmission module 300 is a downstream signal light (namely, a signal light sent by an OLT on a device side to an ONU on a client side). A corresponding center wavelength of G-PON is 1490 nm, a center wavelength of 10G-PON is 1577 nm, and a center wavelength of 50G-PON is 1342 nm. In this case, the second optical splitting unit 102 is configured to isolate the wavelengths at a receive end and a transmit end.

A minimum interval difference (namely, a difference between a wavelength range endpoint 1330 nm of an upstream signal light of G-PON and a wavelength range endpoint 1340 nm of a downstream signal light of 50G-PON) between the upstream signal light and the downstream signal light is 10 nm. To isolate the upstream signal light from the downstream signal light, an included angle between the second direction and a normal line of the second optical splitting unit 102 is less than or equal to 45 degrees. In addition, to ensure miniaturization of the optical assembly, the included angle between the second direction and the normal line of the second optical splitting unit 102 may be further limited to being less than or equal to 13.5 degrees. The included angle between the second direction and the normal line of the second optical splitting unit 102 may be specifically 13.5 degrees, 13 degrees, or 8 degrees, and the angle is adjusted and controlled through active coupling.

The transmission module 300 includes N optical transmitters 301 and N-1 to N+1 transmission optical splitting units 302. The N-1 to N+1 transmission optical splitting units 302 are configured to multiplex signal lights emitted by the N optical transmitters 301, to obtain the output signal light. The optical transmitter 301 may be specifically a laser.

Optionally, one collimation lens 303 may be disposed in front of each of the N optical transmitters 301, and one collimation lens 303 may also be disposed in front of an output port of the output signal light.

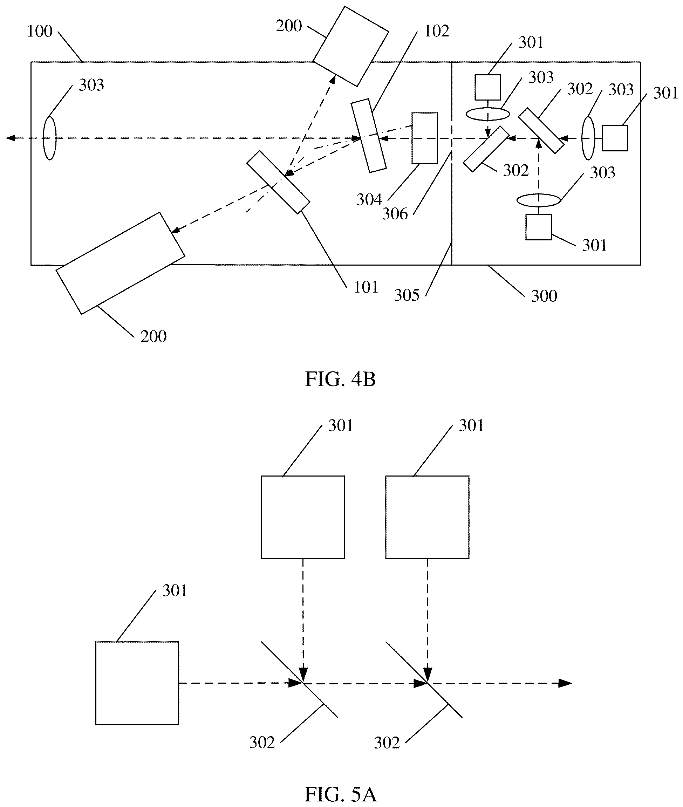

Optionally, as shown in FIG. 4B, the transmission module 300 and the receiving module are integrally formed or coupled. In this case, the optical assembly further includes an isolation board 305. The isolation board 305 is configured to isolate the transmission module 300 from the receiving module, an optical window 306 is disposed on the isolation board 305, and the optical window 306 is configured to transparently transmit the output signal light, to ensure air tightness of the transmission module 300.

Optionally, an isolator 304 is further disposed in the receiving module. After being output from the optical window, the output signal light passes through the isolator 304, to avoid the output signal light from being refracted back to the optical transmitter 301. Then, the output signal light is output only after passing through the second optical splitting unit 102 and the collimation lens 303.

Optionally, the transmission module 300 may have a plurality of forms. For example, as shown in FIG. 5A to FIG. 5C, N is 3. Optical signals emitted by two optical transmitters 301 are first combined into one channel of signal lights, and is then multiplexed with a signal light emitted by another optical transmitter 301 for output together.

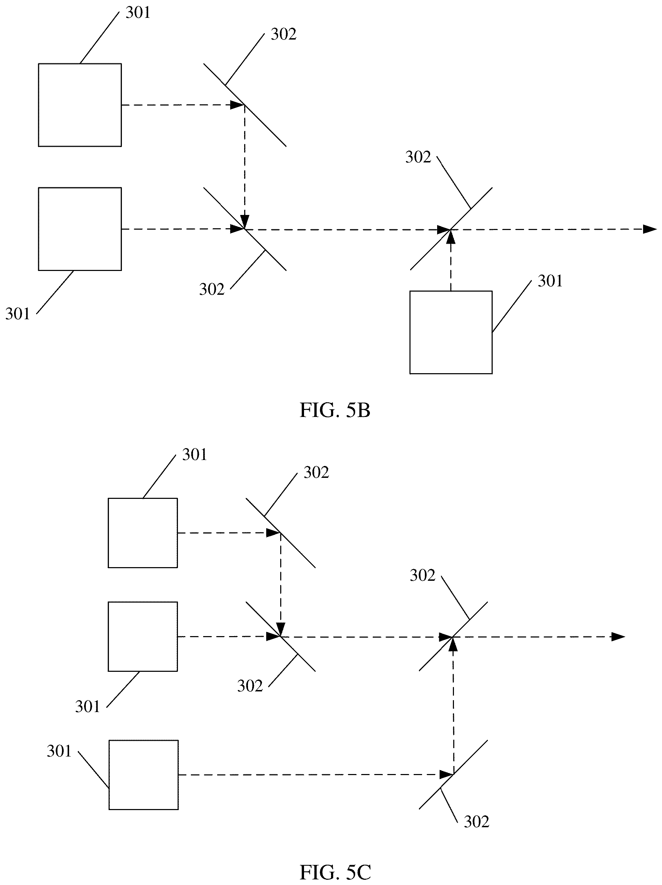

There may be N-1 to N+1 transmission optical splitting units 302. As shown in FIG. 5A, there are N-1 transmission optical splitting units 302. As shown in FIG. 5B, there are N transmission optical splitting units 302. As shown in FIG. 5C, there are N+1 transmission optical splitting units 302. It should be understood that a quantity of transmission optical splitting units 302 may alternatively be adjusted based on an actual requirement. A quantity of transmission optical splitting units is not limited in embodiments of this application.

### Case 2: Third optical splitting unit

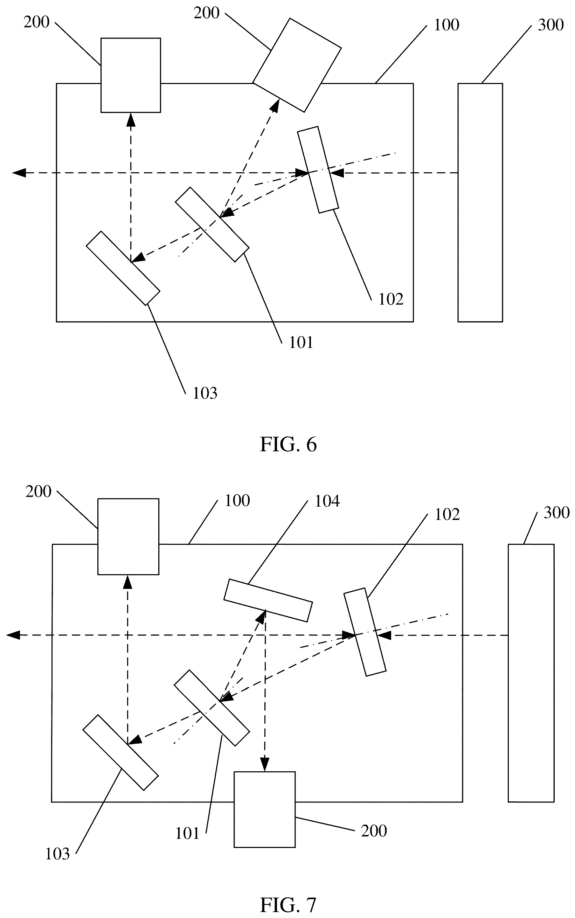

As shown in FIG. 6, the optical splitting module 100 further includes a third optical splitting unit 103.

The first optical splitting unit 101 is configured to transparently transmit the first signal light to the third optical splitting unit 103, and the third optical splitting unit 103 is configured to reflect the first signal light to the receiving module.

In this case, the additional third optical splitting unit 103 is disposed, so that a direction of the first signal light can be changed, and a position of the receiving module is correspondingly changed, thereby facilitating miniaturization of the optical assembly.

### Case 3: Fourth optical splitting unit

Based on Case 2, as shown in FIG. 7, the optical splitting module 100 further includes a fourth optical splitting unit 104.

The first optical splitting unit 101 is configured to reflect the second signal light to the fourth optical splitting unit 104, and the fourth optical splitting unit 104 is configured to reflect the second signal light to the receiving module.

In this case, the additional fourth optical splitting unit 104 is disposed, so that a direction of the second signal light can be changed, and a position of the receiving module is correspondingly changed, thereby facilitating miniaturization of the optical assembly.

It should be understood that the fourth optical splitting unit 104 may be separately disposed, and is not limited to being disposed in a superimposed manner based on the second optical splitting unit 102 or the third optical splitting unit 103.

### Case 4: Fifth optical splitting unit and sixth optical splitting unit

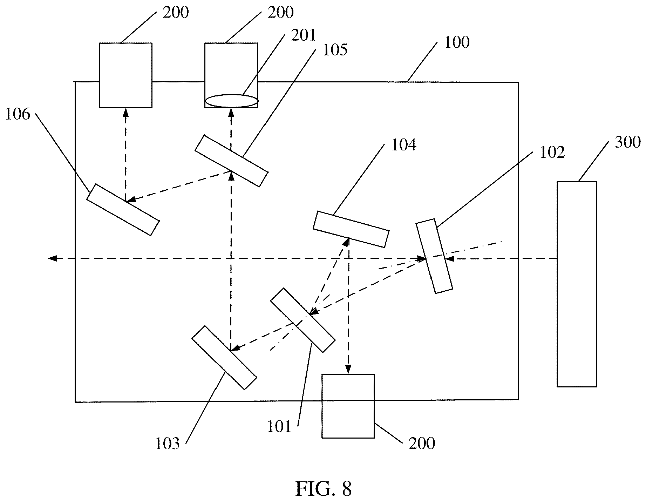

Based on Case 3, as shown in FIG. 8, the optical splitting module 100 further includes a fifth optical splitting unit 105 and a sixth optical splitting unit 106, and M is greater than 1.

The third optical splitting unit 103 is specifically configured to reflect the first signal light to the fifth optical splitting unit 105. The fifth optical splitting unit 105 is configured to: demultiplex the first signal light to obtain a third signal light and a fourth signal light, transparently transmit the third signal light to the receiving module, and reflect the fourth signal light to the sixth optical splitting unit 106. The sixth optical splitting unit 106 is configured to reflect the fourth signal light to the receiving module.

In this case, the first signal light is a signal light obtained by multiplexing signal lights with at least two wavelengths. The additional fifth optical splitting unit 105 and sixth optical splitting unit 106 may be disposed, to continue to demultiplex the first signal light, and send the demultiplexed signal lights to different receiving modules for receiving.

For example, when N is 4 and M is 3, the third signal light or the fourth signal light is a signal light obtained by multiplexing signal lights with two wavelengths. In this case, the corresponding receiving module that receives the multiplexed signal light may be dual-channel TO. Therefore, the optical assembly provided in embodiments of this application may support a multiplexed signal light with four or more different wavelengths or in four or more different wavelength ranges.

When the third signal light is a signal light obtained by multiplexing signal lights with two wavelengths, a filtering unit 201 is disposed on the corresponding receiving module.

It should be understood that the fifth optical splitting unit 105 and the sixth optical splitting unit 106 need to be disposed in a superimposed manner based only on the third optical splitting unit 103, and are not necessarily disposed in a superimposed manner based on the fourth optical splitting unit 104.

### Case 5: Seventh optical splitting unit and eighth optical splitting unit

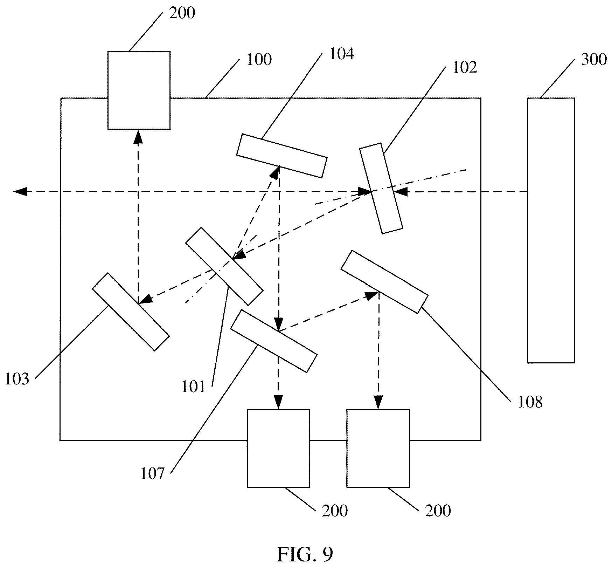

Based on Case 4, as shown in FIG. 9, the optical splitting module 100 further includes a seventh optical splitting unit 107 and an eighth optical splitting unit 108, and N-M is greater than 1.

The fourth optical splitting unit 104 is specifically configured to reflect the second signal light to the seventh optical splitting unit 107. The seventh optical splitting unit 107 is configured to: demultiplex the second signal light to obtain a fifth signal light and a sixth signal light, transparently transmit the fifth signal light to the receiving module, and reflect the sixth signal light to the eighth optical splitting unit 108. The eighth optical splitting unit 108 is configured to reflect the sixth signal light to the receiving module.

In this case, the second signal light is a signal light obtained by multiplexing signal lights with at least two wavelengths. The additional seventh optical splitting unit 107 and eighth optical splitting unit 108 may be disposed, to continue to demultiplex the second signal light, and send a demultiplexed signal light to different receiving modules for receiving.

It should be understood that the seventh optical splitting unit 107 and the eighth optical splitting unit 108 need to be disposed in a superimposed manner based only on the fourth optical splitting unit 104, and are not necessarily disposed in a superimposed manner based on the third optical splitting unit 103 or another optical splitting unit.

### Case 6: Ninth optical splitting unit

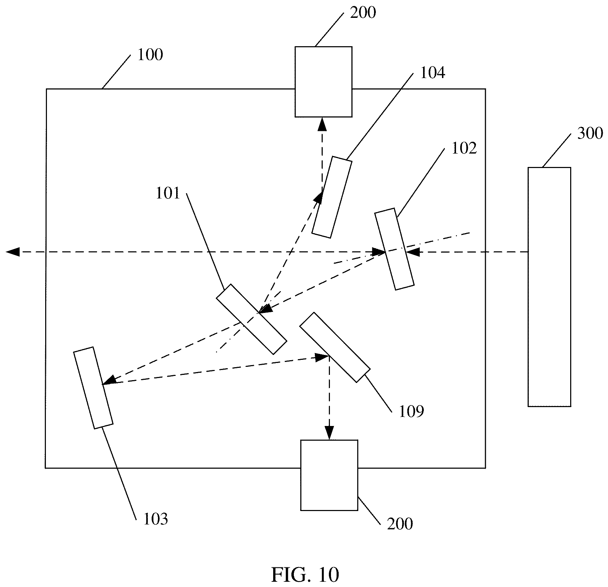

Based on Case 3, as shown in FIG. 10, the optical splitting module 100 further includes a ninth optical splitting unit 109.

The third optical splitting unit 103 is specifically configured to reflect the first signal light to the ninth optical splitting unit 109, and the ninth optical splitting unit 109 is configured to reflect the first signal light to the receiving module.

In this case, the additional ninth optical splitting unit 109 is disposed, so that a direction of the first signal light can be further changed, and a position of the receiving module is correspondingly changed, thereby facilitating miniaturization of the optical assembly.

For example, based on additional disposal of the ninth optical splitting unit 109, an angle of the fourth optical splitting unit 104 is correspondingly adjusted, so that the two receiving modules can be disposed on a same side, thereby implementing miniaturization of the optical assembly.

It should be understood that the ninth optical splitting unit 109 needs to be disposed in a superimposed manner based only on the third optical splitting unit 103, and is not necessarily disposed in a superimposed manner based on the fourth optical splitting unit 104.

### Case 7: Tenth optical splitting unit

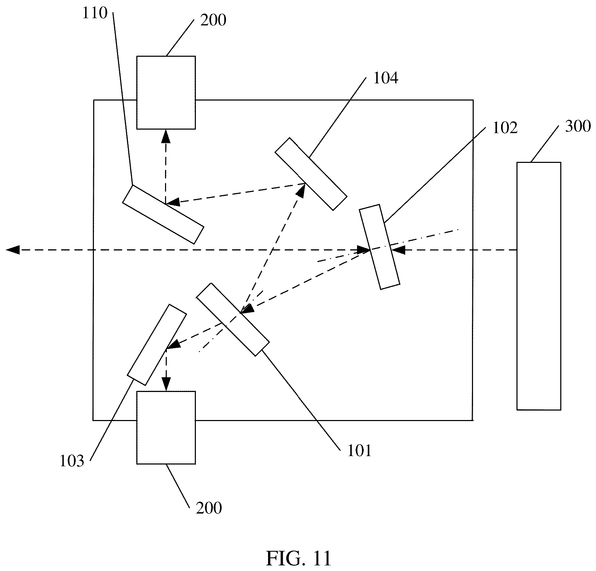

Based on Case 6, as shown in FIG. 11, the optical splitting module 100 further includes a tenth optical splitting unit 110.

The fourth optical splitting unit 104 is specifically configured to reflect the second signal light to the tenth optical splitting unit 110, and the tenth optical splitting unit 110 is configured to reflect the second signal light to the receiving module.

In this case, the additional tenth optical splitting unit 110 is disposed, so that a direction of the second signal light can be further changed, and a position of the receiving module is correspondingly changed, thereby facilitating miniaturization of the optical assembly.

For example, based on additional disposal of the tenth optical splitting unit 110, an angle of the third optical splitting unit 103 is correspondingly adjusted, so that the two receiving modules can be disposed on a same side, thereby implementing miniaturization of the optical assembly.

It should be understood that the tenth optical splitting unit 110 needs to be disposed in a superimposed manner based only on the fourth optical splitting unit 104, and are not necessarily disposed in a superimposed manner based on the third optical splitting unit 103 or another optical splitting unit.

Optionally, the first optical splitting unit 101 to the tenth optical splitting unit 110 and the transmission optical splitting unit 302 in embodiments of this application may be any one of a filter, a beam splitting prism, or a demultiplexer. Each optical splitting unit in embodiments of this application is described by using a filter as an example.

It should be understood that, in embodiments of this application, optical paths of signal lights such as the input signal light, the output signal light, and the first signal light are all parallel optical paths.

In conclusion, it can be learned from the foregoing embodiments that beneficial effects achieved by the optical assembly provided in embodiments of this application include but are not limited to the following three points:
(1) An included angle between the optical path and the normal line of the optical splitting unit is set, so that the optical splitting unit of the optical assembly implements optical splitting based on the small angle, and establishes an extremely narrow optical splitting path, to implement miniaturization of the optical assembly.
(2) A function of a built-in wavelength division multiplexer in the optical assembly may be directly set in the optical module of the optical line termination. The optical line termination can implement a function of outputting beams with a plurality of different wavelengths at corresponding ports without an external device, to implement miniaturization of the optical line termination, and also avoid an operation and maintenance management problem caused by adding the device.
(3) A plurality of optical splitting units are disposed to change the optical path, and the position of the receiving module is correspondingly adjusted, to implement miniaturization of the optical assembly.

The foregoing describes the optical assembly provided embodiments of this application. The following describes an optical module, an optical line termination, and an optical network unit provided in an embodiment of this application with reference to the accompanying drawings.

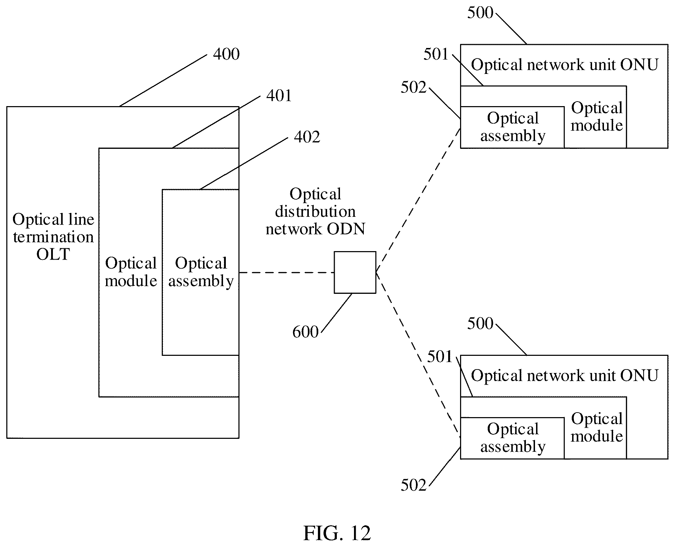

As shown in FIG. 12, an embodiment of this application provides a passive optical network. The passive optical network may be the passive optical network shown in FIG. 1. The passive optical network includes an optical line termination 400, an optical network unit 500, and an optical distribution network 600.

The optical line termination 400 includes an optical module 401, and the optical module 401 includes an optical assembly 402 provided in this embodiment of this application. The optical network unit 500 also includes an optical module 501, and the optical module 501 includes an optical assembly 502 provided in this embodiment of this application.

It should be noted that the optical assembly 402 in the optical line termination 400 may directly correspond to any one of the optical assemblies in FIG. 3 to FIG. 11. For the optical assembly 502 in the optical network unit 500, due to opposite propagation directions of signal lights, any one of the optical assemblies in FIG. 3 to FIG. 11 can be directly used in the optical network unit 500 only after the input signal light, the output signal light, and the optical splitting unit in the optical splitting module are adjusted to adapt to a signal light in a corresponding wavelength range.

The optical line termination 400 is used as an example. The optical module 401 provided in this embodiment of this application may further include a device such as an optical-to-electrical conversion unit. The optical-to-electrical conversion unit is connected to the optical assembly 402 provided in this embodiment of this application. However, a specific internal structure and device of the optical module 401 are not limited in embodiments of this application. The optical assembly 402 in the optical module 401 may be connected to another device, or may be in another connection manner.

In the optical line termination 400 provided in this embodiment of this application, the optical line termination 400 may further include devices such as a medium access control (medium access control, MAC) chip and a line card. The optical module 401 may be connected to the MAC chip via the line card. However, a specific internal structure and device of the optical line termination 400 are not limited in embodiments of this application. The optical module 401 in the optical line termination 400 may be connected to another device, or may be in another connection manner.

A person of ordinary skill in the art may be aware that, in combination with the examples described in embodiments disclosed in this specification, units and algorithm steps may be implemented by using electronic hardware or a combination of computer software and electronic hardware. Whether these functions are performed by using hardware or software depends on particular applications and design constraint conditions of the technical solutions. A person skilled in the art may use different methods to implement the described functions for each particular application, but it should not be considered that the implementation goes beyond the scope of embodiments of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in another manner. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate components may or may not be physically separate, and components displayed as units may or may not be physical units, to be specific, may be located in one position, or may be distributed on a plurality of network units. Some or all of the units may be selected based on an actual requirement to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to a conventional technology, or all or some of the technical solutions may be implemented in a form of a software product. The computer software product is stored in a storage medium and includes several instructions for instructing a computer device (which may be a personal computer, a server, a network device, or the like) to perform all or some of the steps in the methods in embodiments of this application. The foregoing storage medium includes any medium that can store program code, such as a USB flash drive, a removable hard disk, a read-only memory (ROM, read-only memory), a random access memory (RAM, random access memory), a magnetic disk, or an optical disc.

## Claims

1. An optical assembly, comprising an optical splitting module and a receiving module, wherein the optical splitting module comprises a first optical splitting unit, wherein
the first optical splitting unit is configured to receive an input signal light from a first direction, wherein the input signal light is a signal light obtained by multiplexing signal lights of N passive optical networks, and an included angle between the first direction and a normal line of the first optical splitting unit is less than or equal to 45 degrees; and
the first optical splitting unit is further configured to: demultiplex the input signal light to obtain a first signal light and a second signal light, and transmit the first signal light and the second signal light to the receiving module, wherein the first signal light comprises M wavelengths, the second signal light comprises N-M wavelengths, the M wavelengths correspond to M passive optical networks in the N passive optical networks, and the N-M wavelengths correspond to N-M passive optical networks in the N passive optical networks, wherein
N is an integer greater than 1, M is an integer greater than or equal to 1, and M is less than or equal to N-1.

2. The optical assembly according to claim 1, wherein the included angle between the first direction and the normal line of the first optical splitting unit is less than or equal to 13.5 degrees.

3. The optical assembly according to claim 1 or 2, wherein the optical assembly further comprises a transmission module, and the optical splitting module further comprises a second optical splitting unit; and
the transmission module is configured to: multiplex the signal lights of the N passive optical networks to obtain an output signal light, and transmit the output signal light to the second optical splitting unit, wherein the second optical splitting unit is configured to transparently transmit the output signal light.

4. The optical assembly according to claim 3, wherein the second optical splitting unit is further configured to: receive an input signal light from a second direction, and reflect the input signal light to the first optical splitting unit in the first direction.

5. The optical assembly according to claim 4, wherein an included angle between the second direction and a normal line of the second optical splitting unit is less than or equal to 45 degrees.

6. The optical assembly according to claim 5, wherein the included angle between the second direction and the normal line of the second optical splitting unit is less than or equal to 13.5 degrees.

7. The optical assembly according to any one of claims 1 to 6, wherein the optical splitting module further comprises a third optical splitting unit;
the first optical splitting unit is configured to transparently transmit the first signal light to the third optical splitting unit; and
the third optical splitting unit is configured to reflect the first signal light to the receiving module.

8. The optical assembly according to any one of claims 1 to 7, wherein the optical splitting module further comprises a fourth optical splitting unit;
the first optical splitting unit is configured to reflect the second signal light to the fourth optical splitting unit; and
the fourth optical splitting unit is configured to reflect the second signal light to the receiving module.

9. The optical assembly according to claim 7 or 8, wherein the optical splitting module further comprises a fifth optical splitting unit and a sixth optical splitting unit, and M is greater than 1;
the third optical splitting unit is specifically configured to reflect the first signal light to the fifth optical splitting unit;
the fifth optical splitting unit is configured to: demultiplex the first signal light to obtain a third signal light and a fourth signal light, transparently transmit the third signal light to the receiving module, and reflect the fourth signal light to the sixth optical splitting unit; and
the sixth optical splitting unit is configured to reflect the fourth signal light to the receiving module.

10. The optical assembly according to claim 8 or 9, wherein the optical splitting module further comprises a seventh optical splitting unit and an eighth optical splitting unit, and N-M is greater than 1;
the fourth optical splitting unit is specifically configured to reflect the second signal light to the seventh optical splitting unit;
the seventh optical splitting unit is configured to: demultiplex the second signal light to obtain a fifth signal light and a sixth signal light, transparently transmit the fifth signal light to the receiving module, and reflect the sixth signal light to the eighth optical splitting unit; and
the eighth optical splitting unit is configured to reflect the sixth signal light to the receiving module.

11. The optical assembly according to claim 7 or 8, wherein the optical splitting module further comprises a ninth optical splitting unit, the third optical splitting unit is specifically configured to reflect the first signal light to the ninth optical splitting unit, and the ninth optical splitting unit is configured to reflect the first signal light to the receiving module.

12. The optical assembly according to claim 8 or 9, wherein the optical splitting module further comprises a tenth optical splitting unit, the fourth optical splitting unit is specifically configured to reflect the second signal light to the tenth optical splitting unit, and the tenth optical splitting unit is configured to reflect the second signal light to the receiving module.

13. The optical assembly according to any one of claims 1 to 12, wherein the receiving module comprises a receiving port, a quantity of receiving ports is 1 to N, and the receiving port is configured to receive a signal light of at least one passive optical network.

14. The optical assembly according to claim 13, wherein the receiving port comprises a filtering unit, and the filtering unit is configured to allow a signal light that is of a passive optical network and that matches the receiving port to pass.

15. The optical assembly according to claim 13 or 14, wherein the receiving port uses any one of transistor outline TO, butterfly packaging, or chips on board COB.

16. The optical assembly according to any one of claims 3 to 15, wherein the transmission module comprises N optical transmitters and N-1 to N+1 transmission optical splitting units, and the N-1 to N+1 transmission optical splitting units are configured to multiplex signal lights emitted by the N optical transmitters, to obtain the output signal light.

17. The optical assembly according to any one of claims 3 to 16, wherein the optical assembly further comprises an isolation board, the isolation board is configured to isolate the transmission module from the receiving module, an optical window is disposed on the isolation board, and the optical window is configured to transparently transmit the output signal light.

18. The optical assembly according to any one of claims 1 to 17, wherein the first optical splitting unit is any one of a filter, a beam splitting prism, or a demultiplexer.

19. The optical assembly according to any one of claims 1 to 18, wherein the N passive optical networks comprise any N types of the following: gigabit-capable passive optical network G-PON, 10-gigabit-capable passive optical network 10G-PON/XG-PON, 10-gigabit-capable symmetric passive optical network XGS-PON, 50-gigabit-capable passive optical network 50G-PON, Ethernet passive optical network EPON, 10-gigabit Ethernet passive optical network 10G-EPON, and 50-gigabit Ethernet passive optical network 50G-EPON.

20. An optical module, comprising the optical assembly according to any one of claims 1 to 19.

21. An optical line termination, comprising the optical module according to claim 20.

22. An optical network unit, comprising the optical module according to claim 20.
